# EUROPEAN PATENT APPLICATION

(11) **EP 4 725 894 A1**
(43) Date of publication of application: **15.04.2026**
(21) Application number: 24838840.7
(22) Date of filing: 10.07.2024
(51) Int. Cl.: B67C 3/26, B67C 7/00, B29C 48/25

(54) **CONTINUOUS BLOW-FILL-SEAL DEVICE AND USE METHOD**

(30) Priority: 11.07.2023 CN 202310852257
(71) Applicant: Truking Technology Limited, Changsha, Hunan 410600 (CN)
(72) Inventor: XU, Haiwen, Changsha, Hunan 410600 (CN); HUANG, Zhenyu, Changsha, Hunan 410600 (CN); WANG, Liang, Changsha, Hunan 410600 (CN); WANG, Chao, Changsha, Hunan 410600 (CN)
(74) Representative: Lorenz Seidler Gossel Part. mbB
(86) International application number: PCT/CN2024/104781
(87) International publication number: WO 2025/011588

(57) **Abstract**

A continuous blow-fill-seal device, comprising a base frame (1), an extrusion screw assembly (2), an extrusion die head (3), a filling needle assembly (4), a first clean zone (5) and a second clean zone (6), wherein the frame (1) is provided with a moving mechanism (7) to drive the extrusion die head (3) to make a reciprocating motion between the first clean zone (5) and the second clean zone (6), upper sides of both the first clean zone (5) and the second clean zone (6) are provided with a laminar flow assembly (9) , a first partition (81) is disposed between the first clean zone (5) and the second clean zone (6), the first partition (81) is provided with a passage (82), the extrusion screw assembly (2) and the first partition (81) are provided with a second partition (83) and a third partition (84) respectively; when the extrusion die head (3) and the filling needle assembly (4) are within the first clean zone (5), turning on the laminar flow assembly (9) above the first clean zone (5), turning off the laminar flow assembly (9) above the second clean zone (6), sealing the passage (82) by the second partition (83), and separating the third partition (84) from the passage (82); and when the extrusion die head (3) needs to be cleaned or to be replaced, turning on the laminar flow assembly (9) above the second clean zone (6), driving the extrusion die head (3) by the moving mechanism (7) to move to the second clean zone (6), separating the second partition (83) from the passage (82), and sealing the passage (82) by the third partition (84). The continuous blow-fill-seal device ensures that the first clean zone (5) and the second clean zone (6) are partitioned from each other to avoid cross contamination, and also saves energy consumption, reducing operation costs of the device.

## Description

### CROSS-REFERENCE TO RELATED APPLICATIONS

The application is based on and claims the priority benefit of Chinese Patent Application No. 202310852257.9, filed on July 11, 2023, entitled "continuous blow-fill-seal device and use method", which is incorporated herein by reference in its entirety, as one part of the application.

### TECHNICAL FIELD

The present invention relates to food and pharmaceutical packaging machinery and methods of use, and in particular to a continuous blow-fill-seal device and use method.

### BACKGROUND

Continuous BFS device (continuous blow-fill-seal device) is a liquid filling device for the continuous production of molded containers using PE or PP plastics, and mainly includes an extrusion system, a filling system, and a mold system. Plastic pellets turn into a molten state under high temperature and high pressure in the gap between the screw and sleeve of the extrusion system, and then is conveyed forward. At the extrusion die head of the extrusion system, the molten plastic is formed into an elliptical-like parison through a smooth flow channel. The filling system is mounted on the extrusion die head. The filling needle is configured to pass through the core shaft hole of the flow channel on the extrusion die head. The filling needle is mainly a multilayer sleeve structure, with one layer for specifically supplying support gas to the parison to ensure that the parison maintains a full, elliptical shape during downward movement. The parison is continuously extruded and moves downward, and is flanked by continuous-rotating molds. When the molds are closed, the lower part of the mold is configured to seal the previous row of plastic bottles first, and then the upper part of the mold forms the bottle bodies of the next row of plastic bottles. While the bottle body is being formed, the filling needle descends and fills the interior space of the bottle body. Before the plastic bottle is sealed, the filling needle ascends and resets to prevent the mold from clamping the filling needle and causing damage.

The extrusion, molding, and filling zones of the continuous BFS device are compact in structure, with limited space between the mold and the molding die head. During production, the device specification sometimes needs to be changed, and the corresponding filling needle also needs to be changed. The extrusion die head runs for a long time, and melt leakage will possibly accumulate on its lower end face and needs to be cleaned (the parison molding quality may be affected if there is no cleaning for a long time). The above operations are difficult to perform in the molding-filling zone due to the following reasons: firstly, safety concerns: rotating molds are below the extrusion die head, and the extrusion die head must be electrically heated when removing the melt leakage, which means the rotating mold chain may also be accidentally activated due to a human error, posing a risk of injury to operators; secondly, spatial constraints: the space between the lower end of the extrusion die head and the molding mold is extremely narrow.

### SUMMARY

The technical problem to be solved by the present invention is to overcome the deficiencies of the prior art and provide a continuous blow-fill-seal device with a simple structure, convenient for maintenance and size replacement, ensuring operational safety and preventing cross-contamination.

The present invention further provides a use method for the continuous blow-fill-seal device.

To solve the aforementioned technical problems, the technical solution adopted by the present invention is as follows:
A continuous blow-fill-seal device, comprising a base frame, an extrusion screw assembly, an extrusion die head connected to the extrusion screw assembly, and a filling needle assembly disposed on the extrusion die head, further comprising: a first clean zone and a second clean zone, wherein the base frame is provided with a moving mechanism to drive the extrusion die head and the filling needle assembly to make a reciprocating motion between the first clean zone and the second clean zone, upper sides of both the first clean zone and the second clean zone are provided with a laminar flow assembly, a first partition is disposed between the first clean zone and the second clean zone, the first partition is provided with a passage for the extrusion die head and the filling needle assembly to pass through, one end of the extrusion screw assembly connected to the extrusion die head is provided with a second partition matched with the passage, and the first partition is provided with a third partition matched with the passage.

In some embodiments of the present invention, the third partition is a movable structure and a moving direction thereof is perpendicular to an axial direction of the extrusion screw assembly.

In some embodiments of the present invention, the moving mechanism comprises a slide rail disposed on the base frame, the extrusion screw assembly is disposed on a mounting frame, and the mounting frame is provided with a sliding block matched with the slide rail.

In some embodiments of the present invention, the moving mechanism further comprises a gear rack disposed on the base frame, the gear rack is arranged in parallel with the slide rail, and the mounting frame is further provided with a gear wheel matched with the gear rack.

In some embodiments of the present invention, two gear wheels are configured and disposed at both ends of a gear shaft respectively, two sliding blocks are also configured and disposed at both ends of the gear shaft respectively, two gear racks are also configured and arranged one-to-one correspondence to the two gear wheels, and two slide rails are also configured and arranged one-to-one correspondence to the two sliding blocks.

In some embodiments of the present invention, the base frame is disposed in the second clean zone, and each gear rack is disposed at one end of each slide rail adjacent to the first clean zone.

In some embodiments of the present invention, a first limiting plate is disposed at one end of the base frame close to the first clean zone, a second limiting plate is disposed at one end of the mounting frame close to the first clean zone, and the first limiting plate and the second limiting plate are connected by a locking pin.

In some embodiments of the present invention, a position of the first limiting plate and/or the second limiting plate is adjustable.

In some embodiments of the present invention, one end of the base frame close to the first clean zone is further provided with a detection component for detecting whether each gear wheel is in place.

A use method the continuous blow-fill-seal device comprising:
when the extrusion die head and the filling needle assembly are operating within the first clean zone, turning on the laminar flow assembly above the first clean zone, turning off the laminar flow assembly above the second clean zone, sealing the passage by the second partition, and separating the third partition from the passage; and
when the extrusion die head needs to be cleaned, and/or, the extrusion die head and the filling needle assembly need to be replaced, turning on the laminar flow assembly above the second clean zone, driving the extrusion die head and the filling needle assembly by the moving mechanism to move to the second clean zone, separating the second partition from the passage, and sealing the passage by the third partition.

Compared with the prior art, the present invention has the following advantages: In the continuous blow-fill-seal apparatus disclosed herein, the first clean zone may serve as a molding-filling zone, and the second clean zone may serve as a maintenance zone. When maintenance and/or size replacement are required for the extrusion die head and the filling needle assembly, the moving mechanism transfers the extrusion die head and the filling needle assembly as a whole from the molding-filling zone to the maintenance zone. Hence, such a configuration avoids the safety and spatial issues during the maintenance and/or size replacement operations conducted in the molding-filling zone, thus helping to improve the working efficiency of operators. After completing the maintenance and/or size replacement of the extrusion die head and the filling needle assembly, the moving mechanism transfers the extrusion die head and the filling needle assembly as a whole from the maintenance zone back to the molding-filling zone. Since both the first clean zone and the second clean zone provide positive pressure protection of clean laminar flow via a laminar flow assembly, the risk of cross-contamination when the extrusion die head and the filling needle assembly return to the first clean zone again is greatly reduced. Furthermore, the first partition may be alternately cooperated with the second partition and third partition to seal the passage; such a configuration ensures that the first clean zone and the second clean zone are separated from each other regardless of whether the extrusion die head and the filling needle assembly are in the first clean zone or the second clean zone. Hence, this allows selective operation of the laminar flow assembly in either the first clean zone or the second clean zone, thereby preventing the simultaneous operation of both laminar flow assemblies and reducing energy consumption and operating costs.

The use method for the continuous blow-fill-seal device disclosed herein is simple to operate, which not only can ensure that the first clean zone and the second clean zone are separated from each other to prevent cross-contamination, but also can save energy and reduce operating costs.

### BRIEF DESCRIPTION OF THE DRAWINGS

FIG. 1 is a side view of a continuous blow-fill-seal device according to the present invention;
FIG. 2 is an enlarged view of a part A in FIG. 1;
FIG. 3 is an enlarged schematic diagram of a limiting structure between a mounting frame and a base frame according to the present invention;
FIG. 4 is a schematic diagram showing a front structure of the continuous blow-fill-seal device according to the present invention; and
FIG. 5 is a schematic diagram showing a side-looking structure after moving an extrusion die head and a filling needle assembly according to the present invention.

Reference numerals in the drawings denote: 1, base frame; 11, slide rail; 12, gear rack; 13, first limiting plate; 14, detection component; 2, extrusion screw assembly; 21, mounting frame; 22, sliding block; 23, gear wheel; 24, second limiting plate; 25, locking pin; 26, gear shaft; 3, extrusion die head; 4, filling needle assembly; 5, first clean zone; 6, second clean zone; 7, moving mechanism; 81, first partition; 82, passage; 83, second partition; 84, third partition; 9, laminar flow assembly.

### DETAILED DESCRIPTION OF THE EMBODIMENTS

The present invention will be further described below in conjunction with the drawings of the specification and specific preferred embodiments, but the scope of protection of the present invention is not limited thereby.

In the description of the invention, it should be noted that orientation or positional relationships indicated by the terms "up," "down," "front," "back," "left," "right," "inside," and "outside" and similar are based on the orientation or positional relationships shown in the accompanying drawings, and are for convenience of describing the invention and simplifying the description only, rather than indicating or implying that the device or element referred to must have a specific orientation or be constructed and operated in a specific orientation, and therefore should not be construed as limiting the invention.

Besides, terms such as "first", "second" and similar used in the invention do not indicate any sequence, quantity or importance and are only used for distinguishing different components. Accordingly, features defined as 'first' or "second" may explicitly or implicitly include one or more instances of said feature. Throughout the description of the present invention, the term 'multiple' denotes two or more instances, unless otherwise explicitly and specifically defined.

In present invention, unless otherwise explicitly defined or limited, terms such as "connect" shall be interpreted broadly. For example, it may refer to a fixed connection, a detachable connection, or an integral structure; it may denote a mechanical connection or an electrical connection; it may involve direct connection or indirect connection through an intermediary; and it may describe internal communication between two components or the interactive relationship between two components. For those skilled in the art, the specific meaning of the above terms in this application can be understood based on the particular circumstances.

### Embodiment I

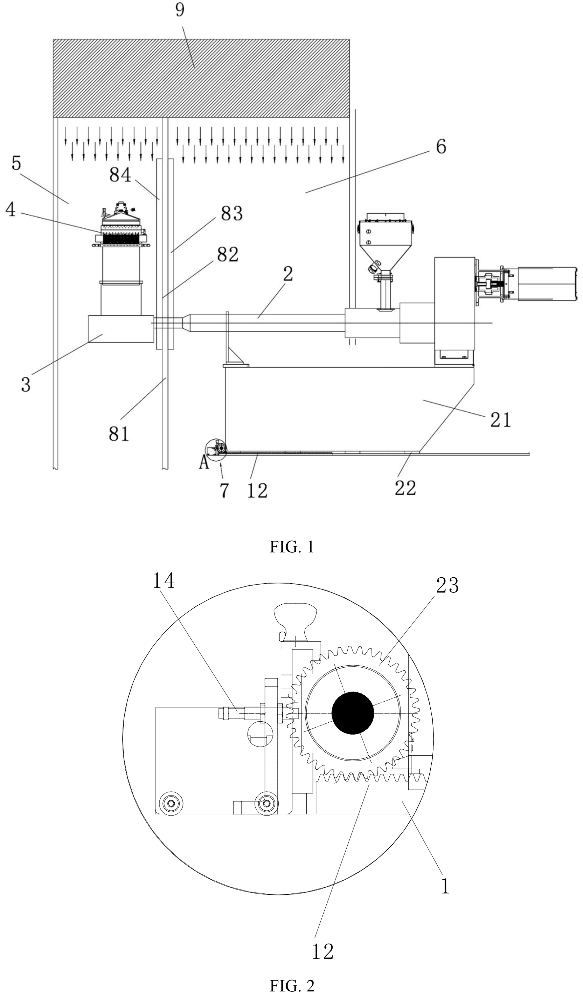

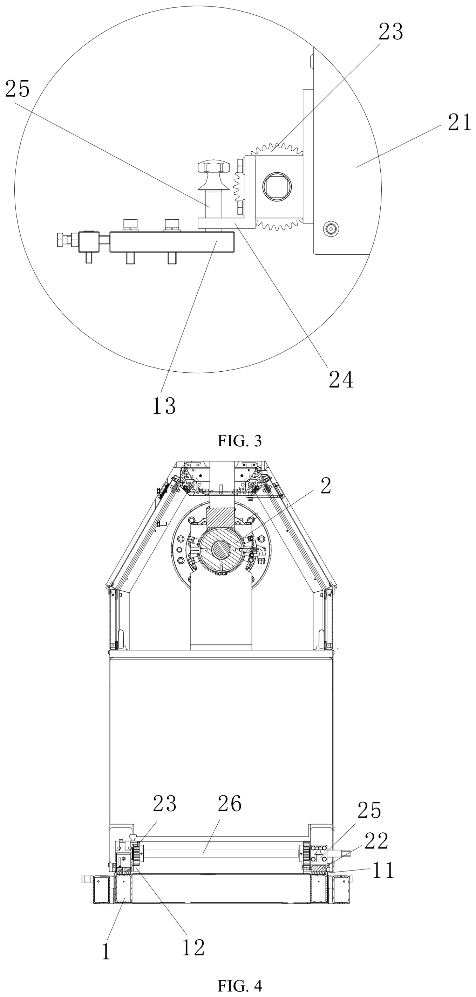

FIGS. 1 to 5 illustrate one embodiment of the continuous blow-fill-seal apparatus according to the present invention. The blow-fill-seal apparatus includes a base frame 1, an extrusion screw assembly 2 (including an extrusion screw and a peripheral barrel thereof, etc.), an extrusion die head 3 connected to the extrusion screw assembly 2, and a filling needle assembly 4 disposed on the extrusion die head 3. The apparatus further includes a first clean zone 5 and a second clean zone 6. The base frame 1 is provided with a moving mechanism 7 to drive the extrusion die head 3 and the filling needle assembly 4 to make a reciprocating motion between the first clean zone 5 and the second clean zone 6. Upper sides of both the first clean zone 5 and the second clean zone 6 are provided with a laminar flow assembly 9; a first partition 81 is disposed between the first clean zone 5 and the second clean zone 6. The first partition 81 is provided with a passage 82 for the extrusion die head 3 and the filling needle assembly 4 to pass through. One end of the extrusion screw assembly 2 connected to the extrusion die head 3 is provided with a second partition 83 matched with the passage 82, and the first partition 81 is provided with a third partition 84 matched with the passage 82.

In the continuous blow-fill-seal apparatus of this embodiment, the first clean zone 5 may serve as a molding-filling zone, and the second clean zone 6 may serve as a maintenance zone. When maintenance and/or size replacement are required for the extrusion die head 3 and filling needle assembly 4, the moving mechanism 7 transfers the extrusion die head 3 and the filling needle assembly 4 as a whole from the molding-filling zone to the maintenance zone. Hence, such a configuration avoids the safety and spatial issues during the maintenance and/or size replacement operations conducted in the molding-filling zone, thus helping to improve the working efficiency of operators. After maintenance and/or size replacement of the extrusion die head 3 and filling needle assembly 4, the moving mechanism 7 transfers the extrusion die head 3 and the filling needle assembly 4 as a whole from the maintenance zone back to the molding-filling zone. Since both the first clean zone 5 and the second clean zone 6 provide positive pressure protection of clean laminar flow via the laminar flow assembly 9, the risk of cross-contamination when the extrusion die head 3 and the filling needle assembly 4 return to the first clean zone 5 again is greatly reduced. Furthermore, the first partition 81 may be alternately cooperated with the second partition 83 and the third partition 84 to seal the passage 82, which ensures that the first clean zone 5 and the second clean zone 6 are separated from each other regardless of whether the extrusion die head 3 and the filling needle assembly 4 are in the first clean zone 5 or the second clean zone 6. Hence, this allows selective operation of the laminar flow assembly 9 in either the first clean zone 5 or the second clean zone 6, thereby preventing the simultaneous operation of both laminar flow assemblies 9 on the first clean zone 5 and the second clean zone 6, and reducing energy consumption and operating costs. The wording "matched with" regarding the second partition 83 matched with the passage 82 refers that the second partition 83 may be configured to open or close the passage 82. The wording "matched with" regarding the third partition 84 matched with the passage 82 refers that the third partition 84 may be configured to open or close the passage 82.

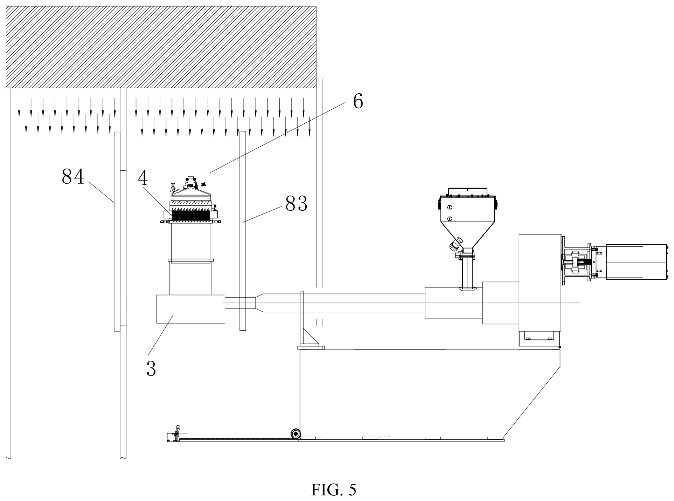

As a preferred embodiment, the third partition 84 may be a movable structure with a movement direction perpendicular to the axial direction of the extrusion screw assembly 2. Referring specifically to FIGS. 1 and 5, the extrusion screw assembly 2 is arranged along a left-right direction, and the third partition 84 moves in a direction perpendicular to the plane of paper. After the extrusion screw assembly 2 drives the extrusion die head 3 and the filling needle assembly 4 to move rightward through the passage 82, the third partition 84 moves toward the passage 82 and seals the passage 82, thereby separating the first clean zone 5 from the second clean zone 6. When the extrusion screw assembly 2 and the filling needle assembly 4 need to return to the first clean zone 5, the third partition 84 is separated from the passage 82 to allow the extrusion die head 3 and the filling needle assembly 4 to pass through. After the extrusion die head 3 and the filling needle assembly 4 are reset, the passage 82 is sealed by the second partition 83 such that the first clean zone 5 is kept to be separated from the second clean zone 6. Furthermore, in this embodiment, the moving mechanism 7 includes a slide rail 11 disposed on the base frame 1, and the extrusion screw assembly 2 is disposed on a mounting frame 21, and the mounting frame 21 is provided with a sliding block 22 meshed with the slide rail 11. The cooperation between the slide rail 11 and sliding block 22 provides a guiding role for the reciprocating motion of the mounting frame 21 and the extrusion screw assembly 2, which avoids deviation and reduces moving resistance, thereby making the moving process smoother and more stable.

Further, in this embodiment, the moving mechanism 7 further includes a gear rack 12 disposed on the base frame 1, the gear rack 12 is arranged parallel to the slide rail 11, and the mounting frame 21 is further provided with a gear wheel 23 matched with the gear rack 12. The gear wheel 23 may be driven to rotate by a drive component, e.g., a gear motor, thereby driving the mounting frame 21 and the extrusion screw assembly 2 as a whole to move along the gear rack 12. The gear and rack pair drive are reliable, capable of bearing large loads, and features a compact structure with less space occupation. Of course, in other embodiments, other drive modes may be employed to achieve the reciprocating motion of the mounting frame 21 and the extrusion screw assembly 2, which will not be further described herein.

As a preferred embodiment, two gear wheels 23 are configured and disposed at both ends of a gear shaft 26, separately respectively. Two sliding blocks 22 are also configured and disposed at both ends of the gear shaft 26, respectively. Two gear racks 12 are also configured and arranged one-to-one correspondence to the two gear wheels 23, and two slide rails 11 are also configured and arranged one-to-one correspondence to the two sliding blocks 22. Such a configuration ensures good symmetry and balanced force distribution, which is beneficial for ensuring the dynamic stability and reliability of the reciprocating motion of the mounting frame 21 and the extrusion screw assembly 2.

As a preferred embodiment, the base frame 1 is disposed in the second clean zone 6, and the gear rack 12 is disposed at one end of the slide rail 11 close to the first clean zone 5.

Further, in this embodiment, one end of the base frame 1 close to the first clean zone 5 is provided with a first limiting plate 13, and one end of the mounting frame 21 close to the first clean zone 5 is provided with a second limiting plate 24. The first limiting plate 13 and the second limiting plate 24 are connected by a locking pin 25. After the extrusion die head 3 and the filling needle assembly 4 are positioned in the first clean zone 5 well, the first limiting plate 13 and second limiting plate 24 are locked by the locking pin 25. Such a configuration may effectively prevent the movement of the extrusion die head 3 and the filling needle assembly 4 due to operator's misoperation during the operation of the mold system (not shown in the drawings), which could damage the mold system or the filling needle. The use of a mechanical limiting structure is simple and reliable.

Preferably, the positions of the first limiting plate 13 and/or the second limiting plate 24 are adjustable (for example, adjustment by means of set screws, slotted holes, and other structures), which facilitates the fine adjustment of the aforesaid mechanical limit and allows for a certain amount of centering adjustment of the distance between the extrusion die head 3 and the center of the mold system. The structure is simple and reasonable.

Further, in this embodiment, one end of the base frame 1 close to the first clean zone 5 is further provided with a detection component 14 (such as a proximity switch or position sensor) for detecting whether the gear wheel 23 is in position. The detection component 14, together with the aforesaid mechanical limiting structure, forms a double-safety mechanism. Such a configuration effectively prevents movement of the extrusion die head 3 and the filling needle assembly 4 due to operator errors during operation of the mold system to damage the mold system or the filling needle, thus ensuring good safety.

### Embodiment II

A use method for the continuous blow-fill-seal device according to this embodiment comprises the followings:
When the extrusion die head 3 and the filling needle assembly 4 are operating within the first clean zone 5, the laminar flow assembly 9 above the first clean zone 5 is turned on, the laminar flow assembly 9 above the second clean zone 6 is turned off, the passage 82 is sealed by the second partition 83, and the third partition 84 is separated from the passage 82.

When the extrusion die head 3 needs to be cleaned, and/or, the extrusion die head 3 and the filling needle assembly 4 need to be replaced for their specifications, the laminar flow assembly 9 above the second clean zone 6 is turned on, the extrusion die head 3 and the filling needle assembly 4 are driven by the moving mechanism 7 to move to the second clean zone 6, the second partition 83 is separated from the passage 82, and the passage 82 is sealed by the third partition 84.

The method of use for the continuous blow-fill-seal device in this embodiment is simple to operate, which not only may ensure that the first clean zone 5 and the second clean zone 6 are separated from each other to prevent cross-contamination, but also may save energy and reduce operating costs.

Although the present invention is disclosed as above in preferred embodiments, which are not intended to limit the present invention. any technical solutions falling within the scope of the present invention's conceptual scheme shall be deemed to fall within the scope of protection of the invention. Without departing from the contents of the technical solutions of the present invention, any changes and modifications made to the embodiments above based on the technical essence of the present invention shall be construed as falling within the protection scope of the technical solutions of the present invention.

## Claims

1. A continuous blow-fill-seal apparatus, comprising a base frame (1), an extrusion screw assembly (2), an extrusion die head (3) connected to the extrusion screw assembly (2), and a filling needle assembly (4) disposed on the extrusion die head (3), and further comprising: a first clean zone (5) and a second clean zone (6), wherein the base frame (1) is provided with a moving mechanism (7) to drive the extrusion die head (3) and the filling needle assembly (4) to make a reciprocating motion between the first clean zone (5) and the second clean zone (6), upper sides of both the first clean zone (5) and the second clean zone (6) are provided with a laminar flow assembly (9) , a first partition (81) is disposed between the first clean zone (5) and the second clean zone (6), the first partition (81) is provided with a passage (82) for the extrusion die head (3) and the filling needle assembly (4) to pass through, one end of the extrusion screw assembly (2) connected to the extrusion die head (3) is provided with a second partition (83) matched with the passage (82), and the first partition (81) is provided with a third partition (84) matched with the passage (82).

2. The continuous blow-fill-seal apparatus according to claim 1, **characterized in that**: the third partition (84) is a movable structure and a moving direction thereof is perpendicular to an axial direction of the extrusion screw assembly (2).

3. The continuous blow-fill-seal device according to claim 1 or 2, **characterized in that**: the moving mechanism (7) comprises a slide rail (11) disposed on the base frame (1), the extrusion screw assembly (2) is disposed on a mounting frame (21), and the mounting frame (21) is provided with a sliding block (22) matched with the slide rail (11).

4. The continuous blow-fill-seal device according to claim 3, **characterized in that**: the moving mechanism (7) further comprises a gear rack (12) disposed on the base frame (1), the gear rack (12) is arranged in parallel with the slide rail (11), and the mounting frame (21) is further provided with a gear wheel (23) matched with the gear rack (12).

5. The continuous blow-fill-seal device according to claim 4, **characterized in that**: two gear wheels (23) are configured and disposed at both ends of a gear shaft (26) respectively, two sliding blocks (22) are also configured and disposed at both ends of the gear shaft (26) respectively, two gear racks (12) are also configured and arranged one-to-one correspondence to the two gear wheels (23), and two slide rails (11) are also configured and arranged one-to-one correspondence to the two sliding blocks (22).

6. The continuous blow-fill-seal device according to claim 4, **characterized in that**: the base frame (1) is disposed in the second clean zone (6), and each gear rack (12) is disposed at one end of each slide rail (11) adjacent to the first clean zone (5).

7. The continuous blow-fill-seal device according to claim 6, **characterized in that**: a first limiting plate (13) is disposed at one end of the base frame (1) close to the first clean zone (5), a second limiting plate (24) is disposed at one end of the mounting frame (21) close to the first clean zone (5), and the first limiting plate (13) and the second limiting plate (24) are connected by a locking pin (25).

8. The continuous blow-fill-seal device according to claim 7, **characterized in that**: a position of the first limiting plate (13) and/or the second limiting plate (24) is adjustable.

9. The continuous blow-fill-seal device according to claim 7, **characterized in that**: one end of the base frame (1) close to the first clean zone (5) is further provided with a detection component (14) for detecting whether each gear wheel (23) is in place.

10. A use method the continuous blow-fill-seal device according to any one of claims 1 to 9, **characterized in that**: comprising:
when the extrusion die head (3) and the filling needle assembly (4) are operating within the first clean zone (5), turning on the laminar flow assembly (9) above the first clean zone (5), turning off the laminar flow assembly (9) above the second clean zone (6), sealing the passage (82) by the second partition (83), and separating the third partition (84) from the passage (82); and
when the extrusion die head (3) needs to be cleaned, and/or, the extrusion die head (3) and the filling needle assembly (4) need to be replaced, turning on the laminar flow assembly (9) above the second clean zone (6), driving the extrusion die head (3) and the filling needle assembly (4) by the moving mechanism (7) to move to the second clean zone (6), separating the second partition (83) from the passage (82), and sealing the passage (82) by the third partition (84).
